# EUROPEAN PATENT SPECIFICATION

(11) **EP 1 242 228 B1**
(45) Date of publication and mention of the grant of the patent: **16.08.2006**
(21) Application number: 01900125.4
(22) Date of filing: 02.01.2001
(51) Int. Cl.: B29C 49/00

(54) **METHOD AND APPARATUS FOR FORMING OF CONTAINERS**
VERFAHREN UND VORRICHTUNG ZUM HERSTELLEN VON BEHÄLTERN
METHODE ET DISPOSITIF DE FORMATION DE RECIPIENTS

(30) Priority: 31.12.1999 IT MO990288
(43) Date of publication of application: 25.09.2002
(60) Divisional application: 03013502.4
(73) Proprietor: ELOPAK SYSTEMS AG, 8152 Glattbrugg (CH)
(72) Inventor: BIANCHINI, Alessandro, I-41010 Cognento (IT)
(74) Representative: Provvisionato, Paolo
(86) International application number: PCT/EP2001/000068
(87) International publication number: WO 2001/049472

(56) References cited:
- EP-A- 0 019 005
- EP-A- 0 514 616
- EP-A- 0 692 364
- EP-A- 0 701 954
- WO-A-94/08852
- WO-A-98/13191
- WO-A-98/31529
- WO-A-99/28204
- DE-A- 3 141 069
- US-A- 2 991 500
- US-A- 3 783 870
- US-A- 4 105 031
- US-A- 4 184 904
- "NOVEL BLOW MOLDING PROCESS" RESEARCH DISCLOSURE,GB,INDUSTRIAL OPPORTUNITIES LTD. HAVANT, no. 304, 1 August 1989 (1989-08-01), page 565 XP000069747 ISSN: 0374-4353

## Description

WO-94/08852 discloses a forming system in which there are arranged in succession a preheating station for preheating of sheet material, a welding station, in which opposing regions of the sheet material are joined along intended outlines of containers so as to define pouches which are interconnected by conduits through which a forming fluid can be injected, a forming station, in which the forming fluid is injected into the pouches in order to expand the pouches up to form therefrom groups of containers, the formed containers being joined together by undeformed portions of the sheet material, a cutting station in which each group of containers is severed from the sheet material and advanced through a filling station, in which product is introduced into the formed containers through openings thereof, a scaling station in which the containers are sealed by closing said openings, and a cutting station in which the formed and sealed containers are cut out from the undeformed sheet material.

EP-0692364 discloses a similar forming system in which at least one further sealing and forming station is interposed between the welding station and the forming station, which allows more gradual forming of containers.

Document WO-99/28204 discloses a method for forming containers comprising the steps of providing heating means, heating a first and second sheet material, joining together said first and second sheet material so as to form pouches and conduit means leading into said pouches, and forming said containers by injecting a forming fluid into the pouches through the conduit means. Moreover, documents US 2,991,500, EP 0019005, EP 0701954 and WO-98/13191 disclose an apparatus for forming containers comprising a heating station, a welding and forming station in which opposite portions of the sheet material are joined together by welding and forming means so as to form pouches and conduit means.

Peelable containers are known, comprising each a bulged wall joined together along its outline with a planar wall, the planar wall comprising a barrier sheet peelably detachable from a permeable sheet welded to said outline. Thus, when the barrier sheet is peelably removed from said permeable sheet, a content of the container can be emanated in the ambience atmosphere through the permeable sheet.

In the peelable containers according to the prior art, removal of the barrier sheet implies gripping one external portion thereof and tearing away the barrier sheet from the permeable sheet. However, gripping of the barrier sheet is difficult to achieve because the barrier sheet and the permeable sheet adhere to each other.

An object of the invention is to improve forming of containers.

Another object of the invention is to improve opening peelability of containers.

According to a first aspect of the invention, there is provided a method for forming containers in accordance with claim 1.

According to a second aspect of the invention, there is provided apparatus for forming containers in accordance with claim 9.

Owing to these aspects of the invention, it is possible to work webs of different materials, without incurring the risk that excessive heat damages any of the webs.

In this way, containers having a facilitating peelability zone are formed in a particularly simple and economic way.

The invention can be better understood and carried out with reference to the drawings attached which show exemplifying and not restrictive versions thereof, wherein:
Figure 1 is a front schematic view of a machine for forming containers from sheet material;
Figure 2 is a section taken along the plane II-II of Figure 1;
Figure 3 is a highly enlarged and broken section of a version of the injection nozzles of the forming fluid;
Figure 4 is a section as Figure 2, but relative only to the sealing and forming station with mould in a closing position;
Figure 5 is a front view of a peelable container;
Figure 6 is highly enlarged and broken section along the plane VI-VI of Figure 5;
Figure 7 is a section as Figure 6, but relative to a partially open container, i.e. an activated container;
Figure 8 is a front view of a mould part for peelable containers;
Figure 9 is a view as Figure 8, but relative to a variant of the injection means of the forming fluid;
Figure 10 is a highly enlarged and broken section taken along the plane X-X of Figure 8 relative to a complete mould.

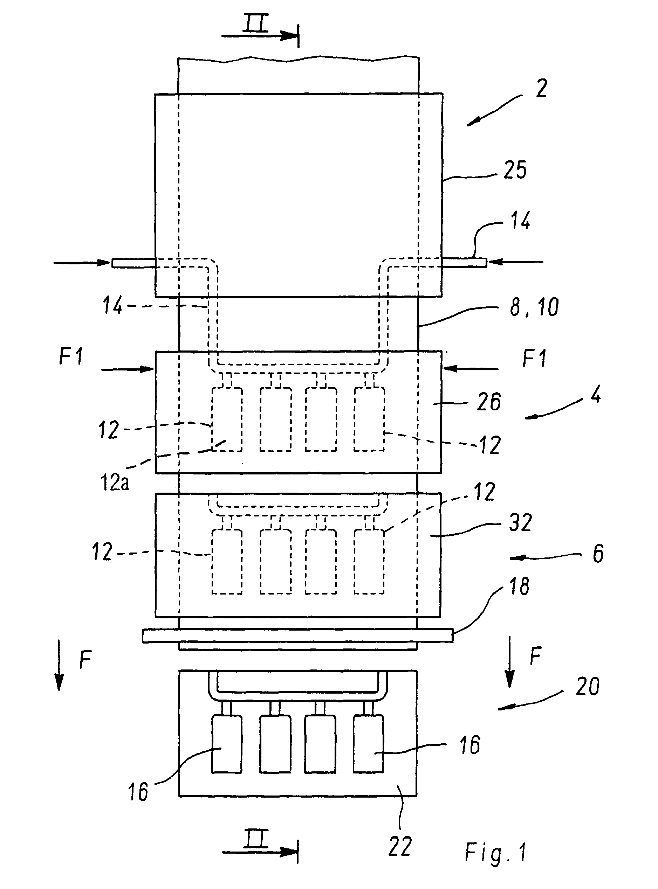

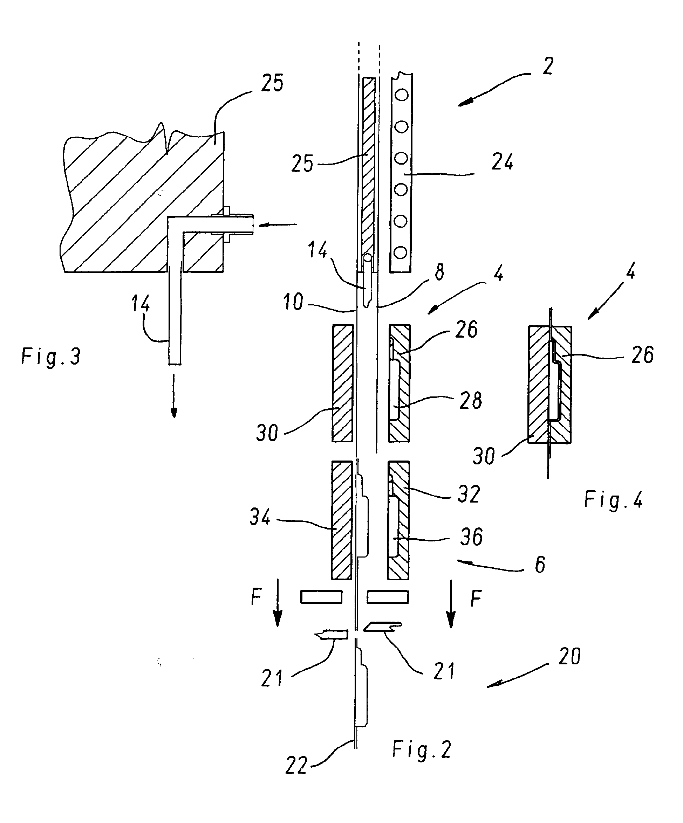

As shown in Figures 1, 2 and 3, a machine for forming containers comprises in sequence: a heating station 2 wherein a first web 8 of thermoformable sheet material and a second web 10 of sheet material (not necessarily thermoformable) are heated, a welding-and-forming station 4, in which the first web 8 and the second web 10 are welded along intended outlines 12 of precursor containers, or pouches, 12a and a forming fluid is injected through injectors 14 in order to form containers defined by the contours 12 and a stabilizing station 6 wherein the shape of the formed containers 16 is stabilized. Downstream of the stabilizing station 6, advancing means 18 is provided in order to advance by steps the first sheet 8 and the second sheet 10 from the stations 2, 4 and 6 toward a cutting station 20 wherein groups 22 of formed containers 16 are separated from the sheets 8, 10 by cutting means 21.

The heating station 2 includes a heating unit 24, such as a heating lamp unit, facing the first web 8 and a screen 25 disposed between the first web 8 and the second web 10. In this way, the first web 8 is more heated than the second web 10 and, if the first web is constituted by plastic material, it will attain a temperature very close to the softening temperature (nearly about some hundred centigrade degrees). Instead the second sheet 10 is only slightly heated, for instance nearly about to a temperature of some ten centigrade degrees.

In the sealing-and-forming station 4, a first mould portion 26 is provided having hollows 28 suitable to receive corresponding regions of the first sheet 8 when forming fluid is injected through the injectors 14, the injectors 14 extending internally into the screen 25 so as to project from it toward the sealing and forming station 4 and laterally so as be connected with ducts of pressurized air, not shown.

In a version not shown, the injectors can also be inserted laterally between the first mould portion 26 and a second mould portion 30 cooperating with the first mould portion 26 in the position shown by arrow F1.

The first mould portion 26 is cooled, so that, when the material of the first web 8, which is deformed by the action of the forming fluid, comes into contact with the cold walls of the first portion 26 of mould, it cools, assuming thereby final shape and dimensions.

The second mould portion 30 is substantially plane, i.e. without the hollow opposed to the first portion 26 of mould, so that, when the first mould portion 26 and the second mould portion 28 are moved in a closing position, they lock between them corresponding portions of the first web 8 and of the second web 10.

The second mould portion 30 is heated, so that the second sheet 10, which lies at a relatively low temperature, is heated up to a temperature suitable to allow to seal it to the first web 8 along the intended outlines 12.

The stabilizing station 6 includes a further first mould portion 32 and a further second mould portion 34, structurally analogous to the first mould portion 26 and to the second mould portion 30, respectively.

However, one or both of the further first mould portion 32 and the further second mould portion 34 can be cooled.

The further second mould portion 34 is not heated, because this might damage the effectiveness of the weld along the intended contours 12 which is carried out at the welding-and-forming station 4.

The further second mould portion 32 is provided with further hollows 36 slightly greater than the hollows 28 of the first mould portion 28 to stabilize the final shape and dimension of the formed containers.

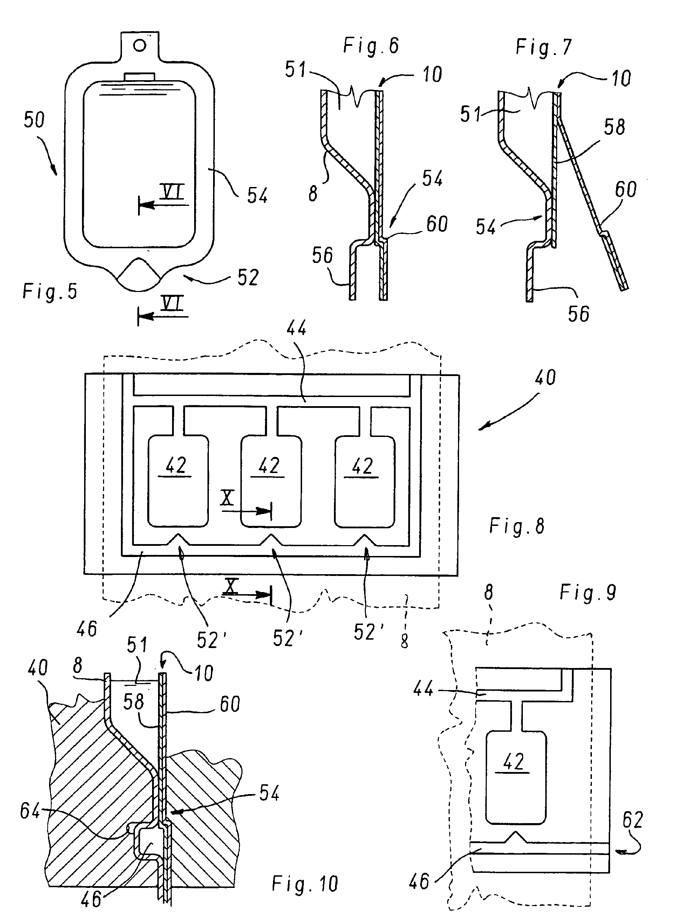

As seen in Figure 8, a mould 40 of a version of the welding-and-forming station 4 has depressions 42 for receiving the material of the first web 8 deformed by the forming fluid and shows also grooves 44 interconnecting the depressions 42, forming canalizations for the forming fluid defined by the first web 8 and the second web 10. Furthermore the grooves 44 can extend up to define further grooves 46 suitable to form in the first web 8 marginal regions 52' of external edge of container distanced apart from corresponding regions of the second web 10.

In this way, it is possible to manufacture a container 50 as shown in the Figure 5, wherein a marginal region 52 of a peripheral weld 54 of a container 50 containing a liquid 51 shows a first edge zone 56 of the first web 8 formed so as to lie substantially detached from the corresponding second edge zone 58 of the second web 10. In this way, when a peelable container has to be activated, in order to cause a permeable film 58 to transpire, so as it can emanate volatile substances in the surrounding environment, it is sufficient to grip one of the edges 56, 58 at the marginal region 52 and to remove a barrier layer 60 initially associated to the permeable film 58.

Advantageously, also the second edge zone 58 of the second sheet 10 can be fully formed so as to increase distance from the first edge zone 56 of the first sheet 8.

As shown in Figure 9, the further grooves 46 can be fed with pressurized forming fluid independently, i.e. through inlet 62.

As shown in Figure 10, in order to make easier forming of the edge 56 of the first sheet 8, it is possible to obtain an additional recess 64 in the further grooves 46 at a region designed to form a portion of the edge 56 closer to the weld 54.

## Claims

1. Method for forming containers, comprising providing heating means (2, 24), indexing a first sheet material (8) and a second sheet material (10) through a heating station, heating (2) the first and the second sheet material, joining together said first and second sheet material (8,10) along intended outlines (12) of containers (16) so as to form pouches (12a) bounded by said intended outlines and conduit means (44) leading out into said pouches, said conduit means (44) being suitable to inject therethrough a forming fluid, forming said containers (16,50) by expanding said pockets by injecting said forming fluid through said conduit means (44), **characterized in that**, said heating comprises selectively heating said first sheet material (8) more than the second sheet material (10).

2. A method according to claim 1, wherein said expanding comprises expanding outer regions of said sheet material externally of said intended outlines (12) so as to form in each container an opening region (52) in which said first and second sheet material (8,10) are spaced apart to each other.

3. A method according to claim 2, wherein said joining further comprises forming further conduit means (46) leading out into said outer regions.

4. Method according to claim 1, or 2, or 3, wherein said selectively heating comprises interposing screen means (25) between said first web (8) and said second sheet material (10).

5. Method according to any preceding claim, wherein said heating comprises heating said second sheet material (10) after selectively heating said first sheet material (8).

6. Method according to claim 5, wherein said heating said second sheet material (10) takes place together with said joining.

7. Method according to any of the preceding claims, wherein said expanding takes place while said first sheet material (8) is cooled.

8. Method according to any of the preceding claims and further comprising, after said expanding, stabilizing said containers (16).

9. Apparatus for forming containers, comprising indexing a first sheet material (8) and a second sheet material (10) through a heating station (2) and through a welding-and-forming station (4) in which opposing portions of said first sheet material (8) and second sheet material (10) are joined together by welding-and-forming means (26,30) along intended outlines (12) of containers so as to form pouches (12a) and conduit means (44) leading out into said pouches (12a) to inject therein a forming fluid and form said containers (16) by expanding said pouches (12a), **characterized in that** said heating station (2) comprises selective heating means (24,25) arranged to selectively heat said first sheet material (8) more than said second sheet material (10).

10. Apparatus according to claim 9, wherein said welding-and-forming means (26,30) is provided with recess means for receiving regions of said sheet material externally of said intended outlines (12), in said regions said first sheet material (8) being distanced apart from said second sheet material (10) so as to define opening means (52) of said container (50).

11. Apparatus according to claim 10, wherein said welding-and-forming means (26,30) defines further conduit means (46) in said sheet material, said further conduit means (46) leading out into said regions so as to form said regions when said forming fluid is injected.

12. Apparatus according to any one of claims 9 to 11, wherein said selective heating means comprises screen means (25) interposed between said first sheet material (8) and said second sheet material (10).

13. Apparatus according to any one of claims 9 to 12, and further comprising further heating means (30) in said welding-and-heating means (26, 30) at said welding-and-forming station (4), said further heating means (30) being arranged such as to heat said second sheet material (10).

14. Apparatus according to any one of claims 9 to 13, wherein said welding-and-forming means (26,30) are provided with cooling means (26) for cooling said first sheet material (8) at said welding-and-forming station (4).

15. Apparatus according to any one of claims 9 to 14, and further comprising, downstream of said welding-and-forming station, a shape stabilizing station (6).

## Patentansprüche

1. Verfahren zum Formen von Behältern, mit den Schritten: Bereitstellen von Erwärmungsmitteln (2, 24), Vorrücken eines ersten Flachmaterials (8) und eines zweiten Flachmaterials (10) durch eine Erwärmungsstation, Erwärmen (2) des ersten und des zweiten Flachmaterials, Verbinden des ersten und des zweiten Flachmaterials (8, 10) miteinander entlang bestimmter Umrisslinien (12) von Behältern (16), um Taschen (12a), die durch die bestimmten Umrisslinien begrenzt sind, und Kanalmittel (44) zu formen, die in die Taschen führen, wobei die Kanalmittel (44) dazu geeignet sind, ein Formungsfluid durch diese hindurch zu injizieren, Formen der Behälter (16, 50) durch Aufweiten der Taschen durch Injizieren des Formungsfluids durch die Kanalmittel (44), **dadurch gekennzeichnet, dass** das Erwärmen selektiv ein stärkeres Erwärmen des ersten Flachmaterials (8) als des zweiten Flachmaterials (10) aufweist.

2. Verfahren nach Anspruch 1, wobei das Aufweiten ein Aufweiten äußerer Bereiche des Flachmaterials außerhalb der bestimmten Umrisslinien (12) aufweist, um in jedem Behälter einen Öffnungsbereich (52) zu bilden, in dem das erste und das zweite Flachmaterial (8, 10) voneinander beabstandet sind.

3. Verfahren nach Anspruch 2, wobei das Verbinden weiterhin ein Formen weiterer Kanalmittel (46) aufweist, die in die äußeren Bereiche führen.

4. Verfahren nach Anspruch 1, 2 oder 3, wobei das wahlweise Erwärmen ein Eindringen von Abschirmmitteln (25) zwischen die erste Bahn (8) und das zweite Flachmaterial (10) aufweist.

5. Verfahren nach einem der vorhergehenden Ansprüche, wobei das Erwärmen ein Erwärmen des zweiten Flachmaterials (10) nach dem selektiven Erwärmen des ersten Flachmaterials (8) aufweist.

6. Verfahren nach Anspruch 5, wobei das Erwärmen des zweiten Flachmaterials (10) zusammen mit dem Verbinden erfolgt.

7. Verfahren nach einem der vorhergehenden Ansprüche, wobei das Aufweiten erfolgt, während das erste Flachmaterial (8) abgekühlt wird.

8. Verfahren nach einem der vorhergehenden Ansprüche, weiterhin mit dem Schritt: Stabilisieren der Behälter (16) nach dem Aufweiten.

9. Vorrichtung zum Formen von Behältern, mit einem Vorrücken eines ersten Flachmaterials (8) und eines zweiten Flachmaterials (10) durch eine Erwärmungsstation (2) und durch eine Schweiß- und Formungsstation (4), in der gegenüberliegende Abschnitte des ersten Flachmaterials (8) und des zweiten Flachmaterials (10) durch Schweiß- und Formungsmittel (26, 30) entlang bestimmter Umrisslinien (12) von Behältern miteinander verbunden werden, um Taschen (12a) und Kanalmittel (44) zu formen, die in die Taschen (12a) führen, um ein Formungsfluid dort hinein zu injizieren, und um die Behälter (16) durch Aufweiten der Taschen (12a) zu formen, **dadurch gekennzeichnet, dass** die Erwärmungsstation (2) selektive Erwärmungsmittel (24, 25) aufweist, die dazu ausgelegt sind, das erste Flachmaterial (8) selektiv stärker als das zweite Flachmaterial (10) zu erwärmen.

10. Vorrichtung nach Anspruch 9, wobei die Schweiß- und Formungsmittel (26, 30) mit Aussparungsmitteln zum Aufnehmen von Bereichen des Flachmaterials außerhalb der bestimmten Umrisslinien (12) versehen sind, wobei das erste Flachmaterial (8) in diesen Bereichen von dem zweiten Flachmaterial (10) beabstandet ist, um so Mittel (52) zum Öffnen des Behälters (50) zu definieren.

11. Vorrichtung nach Anspruch 10, wobei die Schweiß- und Formungsmittel (26, 30) weitere Kanalmittel (46) in dem Flachmaterial definieren, wobei die weiteren Kanalmittel (46) in die Bereiche führen, um diese Bereiche zu formen, wenn das Formungsfluid injiziert wird.

12. Vorrichtung nach einem der Ansprüche 9 bis 11, wobei die selektiven Erwärmungsmittel Abschirmmittel (25) aufweisen, die zwischen dem ersten Flachmaterial (8) und dem zweiten Flachmaterial (10) eingebracht sind.

13. Vorrichtung nach einem der Ansprüche 9 bis 12, weiterhin mit weiteren Erwärmungsmitteln (30) in den Schweiß- und Formungsmitteln (26, 30) an der Schweiß- und Formungsstation (4), wobei die weiteren Erwärmungsmittel (30) dazu ausgelegt sind, das zweite Flachmaterial (10) zu erwärmen.

14. Vorrichtung nach einem der Ansprüche 9 bis 13, wobei die Schweiß- und Formungsmittel (26, 30) mit Kühlmitteln (26) zum Kühlen des ersten Flachmaterials (8) an der Schweiß- und Formungsstation (4) versehen sind.

15. Vorrichtung nach einem der Ansprüche 9 bis 14, weiterhin mit einer Formstabilisierstation (6) stromabwärts der Schweiß- und Formungsstation.

## Revendications

1. Procédé de formage de récipients, comprenant la fourniture de moyens de chauffage (2, 24), le déplacement intermittent d'un premier matériau en feuille (8) et d'un deuxième matériau en feuille (10) à travers un poste de chauffage, le chauffage (2) du premier et du deuxième matériaux en feuille, la réunion desdits premier et deuxième matériaux en feuille (8, 10) le long des contours projetés (12) de récipients (16) de manière à former des poches (12a) délimitées par lesdits contours projetés et des moyens de conduit (44) débouchant dans lesdites poches, lesdits moyens de conduit (44) étant adaptés pour qu'on y injecte un fluide de formage, le formage desdits récipients (16, 50) par dilatation desdites poches par injection dudit fluide de formage dans lesdits moyens de conduit (44), ***caractérisé en ce que*** ledit chauffage comprend de chauffer sélectivement davantage ledit premier matériau en feuille (8) que ledit deuxième matériau en feuille (10).

2. Procédé selon la revendication 1, dans lequel ladite dilatation comprend la dilation de zones extérieures dudit matériau en feuille extérieurement auxdits contours projetés (12) afin de former dans chaque récipient une zone d'ouverture (52) dans laquelle ledit premier et ledit deuxième matériaux en feuille (8, 10) sont écartés l'un de l'autre.

3. Procédé selon la revendication 2, dans lequel ladite réunion comprend de plus la formation de moyens de conduit supplémentaires (46) débouchant dans lesdites zones extérieures.

4. Procédé selon la revendication 1, ou 2, ou 3, dans lequel ledit chauffage sélectif comprend l'interposition de moyens d'écran (25) entre ledit premier matériau en feuille (8) et ledit deuxième matériau en feuille (10).

5. Procédé selon l'une quelconque des revendications précédentes, dans lequel ledit chauffage comprend le chauffage dudit deuxième matériau en feuille (10) après le chauffage sélectif dudit premier matériau en feuille (8).

6. Procédé selon la revendication 5, dans lequel ledit chauffage dudit deuxième matériau en feuille (10) a lieu en même temps que ladite réunion.

7. Procédé selon l'une quelconque des revendications précédentes, dans lequel ladite dilatation a lieu pendant que ledit premier matériau en feuille (8) est refroidi.

8. Procédé selon l'une quelconque des revendications précédentes, et comprenant de plus, après ladite dilatation, la stabilisation desdits récipients (16).

9. Dispositif pour le formage de récipients, comprenant le déplacement intermittent d'un premier matériau en feuille (8) et d'un deuxième matériau en feuille (10) à travers un poste de chauffage (2) et à travers un poste de soudage et formage (4) dans lequel des portions en vis-à-vis desdits premier matériau en feuille (8) et deuxième matériau en feuille (10) sont réunies l'une à l'autre par des moyens de soudage et formage (26, 30) le long des contours projetés (12) de récipients de manière à former des poches (12a) et des moyens de conduit (44) débouchant dans lesdites poches (12a) pour y injecter un fluide de formage et former lesdits récipients (16) par dilatation desdites poches (12a), ***caractérisé en ce que*** ledit poste de chauffage (2) comprend des moyens de chauffage sélectifs (24, 25) agencés pour chauffer sélectivement davantage ledit premier matériau en feuille (8) que ledit deuxième matériau en feuille (10).

10. Dispositif selon la revendication 9, dans lequel lesdits moyens de soudage et formage (26, 30) sont pourvus de moyens d'évidemment pour recevoir des zones dudit matériau en feuille extérieurement auxdits contours projetés (12), dans lesdites zones, ledit premier matériau en feuille (8) étant écarté dudit deuxième matériau en feuille (10) de manière à définir des moyens d'ouverture (52) dudit récipient (50).

11. Dispositif selon la revendication 10, dans lequel lesdits moyens de soudage et formage (26, 30) définissent des moyens de conduit supplémentaires (46) dans ledit matériau en feuille, lesdits moyens de conduit supplémentaires (46) débouchant dans lesdites zones afin de former lesdites zones lorsque ledit fluide de formage est injecté.

12. Dispositif selon l'une quelconque des revendications 9 à 11, dans lequel lesdits moyens de chauffage sélectifs comprennent des moyens d'écran (25) interposés entre ledit premier matériau en feuille (8) et ledit deuxième matériau en feuille (10).

13. Dispositif selon l'une quelconque des revendications 9 à 12, et comprenant de plus des moyens de chauffage supplémentaires (30) dans lesdits moyens de soudage et formage (26, 30) dans ledit poste de soudage et formage (4), lesdits moyens de chauffage supplémentaires (30) étant agencés de manière à chauffer ledit deuxième matériau en feuille (10).

14. Dispositif selon l'une quelconque des revendications 9 à 13, dans lequel lesdits moyens de soudage et formage (26, 30) sont pourvus de moyens de refroidissement (26) pour refroidir ledit premier matériau en feuille (8) au niveau dudit poste de soudage et formage (4).

15. Dispositif selon l'une quelconque des revendications 9 à 14, et comprenant de plus, en aval dudit poste de soudage et formage, un poste (6) de stabilisation de forme.
